# EUROPÄISCHE PATENTSCHRIFT

(11) **EP 2 362 173 B1**
(45) Veröffentlichungstag und Bekanntmachung des Hinweises auf die Patenterteilung: **19.12.2012**
(21) Anmeldenummer: 11163495.2
(22) Anmeldetag: 24.08.2007
(51) Int. Cl.: F27B 3/08

(54) **Schmelzofen, insbesondere Lichtbogenofen**
Furnace, in particular arc furnace
Four de fusion, notamment four à arc lumineux

(30) Priorität: 04.09.2006 DE 102006041421
(43) Veröffentlichungstag der Anmeldung: 31.08.2011
(62) Teilanmeldung aus: 07801878.5
(73) Patentinhaber: Fuchs Technology Holding AG, 6010 Kriens (CH)
(72) Erfinder: Fuchs, Gerhard, 77694, Kehl-Bodersweier (DE)
(74) Vertreter: Kramer - Barske - Schmidtchen

(56) Entgegenhaltungen:
- TRENKLER H: "ENERGY-SAVING DC TWIN SHELL ARC FURNACE FOR MELTING LOW-GRADE SCRAP", ABB REVIEW, ABB ASEA BROWN BOVERI, ZURICH, CH, Nr. 9/10, 1996, Seiten 18-27, XP000681512, ISSN: 1013-3119

## Beschreibung

Die Erfindung betrifft einen Schmelzofen, insbesondere Lichtbogenofen, mit einem Ofengefäß aus einem unteren Gefäßteil und einem zylindrischen oberen Gefäßteil zur Aufnahme von zu schmelzendem Einsatzmaterial, insbesondere von Metallschrott, sowie mit einem von einer Deckeltragkonstruktion getragenen Ofengefäßdeckel.

Bei konventionellen Schmelzöfen sind zur Erzielung des Abstichgewichtes des Schmelzofens, das heißt des Gewichtes an erschmolzenem Flüssigmetall, bei dem der Ofen abgestochen wird, zwei oder drei Chargiervorgänge erforderlich. Dies bedeutet, dass wenigstens einmal der Schmelzprozess unterbrochen, der Ofengefäßdeckel entfernt und Einsatzmaterial eines weiteren Schrottkorbes chargiert werden muss. Dies bedingt Verluste und eine Verlängerung der tap-totap-Zeit.

Bei Lichtbogenöfen wird die Höhe des Ofengefäßes durch die zulässige Länge der in das Gefäß eintauchenden Elektroden bestimmt. Überschreitet die Länge der Elektroden 3 bis 3,5 m, so kommt es infolge der auf sie einwirkenden Lorentzkräfte häufig zu Elektrodenbrüchen, die eine Unterbrechung des Schmelzprozesses erforderlich machen. Da insbesondere beim Feinungsprozess die Elektroden so weit eintauchen müssen, bis der Lichtbogen auf der Badoberfläche brennt, ist bei durch den Deckel eingeführten Elektroden durch die begrenzte zulässige Länge der Elektroden auch die Höhe des Ofengefäßes begrenzt, wenn Unterbrechungen als Folge von Elektrodenbrüchen vermieden werden sollen.

Das Volumen des zu chargierenden Einsatzmaterials hängt von dessen Volumengewicht ab. Soll Leichtschrott (Metallspäne) eingeschmolzen werden, so ist ein größeres Volumen zur Erzielung des Abstichgewichtes der Schmelze erforderlich als bei Schwerschrott. Der Aufnahmeraum des Ofengefäßes sollte an diese unterschiedlichen Volumina anpassbar sein, um die Betriebsbedingungen des Schmelzofens an die Einsatzmateriallieferung anpassen zu können. Aus ABB Review 9/10, 1996, S. 18-27 und der JP 4-97295 (U) sind Lichtbogenöfen bekannt.

Aufgabe der Erfindung ist es, den Aufnahmeraum des Ofengefäßes eines Schmelzofens, insbesondere eines Lichtbogenofens der einleitend genannten Art so weit zu erhöhen, dass er das gesamte Einsatzmaterial für das Abstichgewicht des Ofens aufnehmen kann, so dass der Schmelzprozess bis zum Abstechen nicht durch Nachchargieren unterbrochen werden muss. Bei einem Lichtbogenofen soll dies unter Einhaltung der zulässigen Elektrodenlänge möglich sein.

Eine weitere Aufgabe ist es, den Aufnahmeraum des Ofengefäßes variabel auszubilden, so dass er an die verschiedenen Volumina anpassbar ist, welche bei unterschiedlichen Einsatzmaterialien (Leichtschrott, Schwerschrott, Pellets) zur Erzielung des für den Schmelzofen vorgesehenen Abstichgewichtes erforderlich sind.

Diese Aufgaben werden durch einen Schmelzofen mit den Merkmalen des Anspruches 1 gelöst. Vorteilhafte Ausgestaltungen der Erfindung sind den Unteransprüchen zu entnehmen.

Das Volumen des Aufnahmeraums ist durch eine teleskopische Verschiebbarkeit des Oberteils des Ofengefäßes, das heißt, mindestens eines Teils des Obergefäßes und des Deckels, variabel veränderbar. Bei einer Ausführungsform enthält das zylindrische obere Gefäßteil einen ersten unteren und einen zweiten oberen zylindrischen Abschnitt, von denen einer den anderen übergreift und durch wenigstens eine Vorrichtung relativ zu diesem teleskopisch verschiebbar ausgebildet ist. Hierdurch lässt sich die Größe des Aufnahmeraums des Ofengefäßes für das Einsatzmaterial in der Höhe veränderlich gestalten, je nach dem wie weit der obere zylindrische Abschnitt teleskopisch ausgefahren wird. Dies erlaubt eine Vergrößerung und Anpassung des Aufnahmeraums des Ofengefäßes an das Einsatzmaterial und hat durch die Variabilität der Höhe bei einem Lichtbogenofen, bei dem die Elektroden durch den Deckel eingeführt werden, auch den Vorteil, dass beim Einschmelzen, infolge der sich durch Nachrutschen von Einsatzmaterial in die Schmelzkrater verringernden Höhe des Einsatzmaterials, die Elektrodentragarme zusammen mit dem Deckel abgesenkt werden können, so dass bei, auf das zulässige Maß begrenzter Elektrodenlänge die Elektrodenspitzen bis zum erforderlichen Abstand zum Badspiegel herabgeführt werden können.

Der gegenüber dem unteren zylindrischen Abschnitt teleskopisch verschiebbare obere zylindrische Abschnitt des oberen Gefäßteils kann entweder innerhalb oder außerhalb des unteren Abschnittes angeordnet sein. Vorzugsweise ist er außerhalb des unteren Abschnittes, diesen übergreifend, angeordnet.

Der obere Abschnitt kann sich auf längs des Umfangs des Ofengefäßes verteilt angeordnete Hubvorrichtungen abstützen und somit dem oberen Gefäßteil zugeordnet sein. Vorzugsweise ist der obere zylindrische Abschnitt des oberen Gefäßteils aber am Rand des Ofengefäßdeckels angebracht und durch die Deckelhubvorrichtung relativ zum unteren zylindrischen Abschnitt des oberen Gefäßteils teleskopisch verschiebbar.

Im letztgenannten Fall wird zwar die Deckelhubvorrichtung durch ein weiteres Gewicht belastet und der Hub der Deckelhubvorrichtung wesentlich vergrößert, da er auch die teleskopische Verschiebbarkeit aufnehmen muss und hierfür ein verhältnismäßig exaktes senkrechtes Anheben erforderlich ist; dies wird jedoch mit der im einzelnen beschriebenen Deckeltragkonstruktion mit drei definierten Lagern des Deckels und der beschriebene Hubvorrichtung für die Deckeltragkonstruktion erreicht.

Aufgrund der teleskopischen Verschiebbarkeit des oberen zylindrischen Abschnittes des oberen Gefäßteils ist es auch erforderlich bei einem Lichtbogenofen mit einer separaten Elektrodenhubvorrichtung diese mit einem größeren, die teleskopische Verschiebbarkeit berücksichtigenden Hub auszubilden. Gemäß einer vorteilhaften Ausgestaltung der Erfindung trägt jedoch die Decketragkonstruktion, im konkreten Fall der waagrechte Schenkel eines L-förmigen Traggliedes des Deckels, die Elektrodenhubvorrichtung. Hierdurch ist es nicht erforderlich den Hub der Elektrodenhubvorrichtung durch Anpassung an den Hub der teleskopischen Verschiebbarkeit selbst zu erhöhen.

Im Hinblick auf die mögliche Eintauchtiefe der Elektroden in das Gefäß ist es ferner vorteilhaft, wenn der Deckel nicht wie üblich nach oben gewölbt, sondern flach ausgebildet wird. Die erforderliche Stabilität kann durch Versteifungsrippen auf dem Deckel verbessert werden.

Die Erfindung wird durch Ausführungsbeispiele anhand von neun Figuren näher erläutert. Es zeigen
- Fig. 1: in einer perspektivischen Ansicht, teilweise geschnitten, eine erste Ausführungsform der Erfindung, die den teleskopisch verschiebbaren oberen Abschnitt des oberen Gefäßteils im abgesenkten Zustand darstellt;
- Fig.2: eine Seitenansicht dieser Ausführungsform längs der Schnittlinie II-II von Fig. 3;
- Fig.3: eine Draufsicht dieser Ausführungsform,
- Fig. 4: eine der Fig. 2 entsprechende Ansicht dieser Ausführungsform im angehobenen Zustand des teleskopisch verschiebbaren oberen Abschnittes des oberen Gefäßteils;
- Fig. 5 und Fig. 6: die in Fig. 2 bzw. Fig. 4 durch Kreise V und VI markierten Ausschnitte;
- Fig. 7: eine Seitenansicht einer weiteren Ausführungsform der Erfindung, teilweise geschnitten längs der Linie VII-VII von Fig. 8;
- Fig. 8: eine Draufsicht dieser Ausführungsform, und
- Fig. 9: eine der Fig. 7 entsprechende Ansicht dieser Ausführungsform mit angehobenem oberen Abschnitt des oberen Gefäßteils.

Ein Schmelzofen zum Einschmelzen von eisenhaltigen Materialien, wie Stahlschrott, enthält ein Ofengefäß 1, das oben durch einen Deckel 2 verschließbar ist. Bei einem Lichtbogenofen ist eine Elektrode (Gleichstromlichtbogenofen) oder es sind drei Elektroden 3, 4, 5 (Drehstromofen) jeweils durch Öffnungen 6, 7, beziehungsweise eine weitere, nicht dargestellte dritte Öffnung in das Innere des Ofengefäßes für den Schmelz- und Feinungsprozess einfahrbar. Im Allgemeinen ist im Deckel auch eine, an eine Abgasleitung anschließbare Abgasöffnung 9 vorgesehen. Ferner befindet sich im Boden oder in einem Vorsprung 10 des Gefäßes eine Abstichöffnung 11 und in der gegenüberliegenden Gefäßwand eine Arbeitsöffnung 12. Das Ofengefäß 1 ist üblicherweise kippbar ausgebildet. Diese Merkmale eines Schmelzofens bzw. Lichtbogenofens sind allgemein bekannt, so dass sie nicht näher beschrieben beziehungsweise detaillierter dargestellt sind.

Wenn das zu schmelzende Einsatzmaterial von oben in das Gefäß eingebracht werden soll, müssen für diesen Chargiervorgang der Deckel und im Falle eines Lichtbogenofens auch die Elektroden vom Gefäß entfernt werden. Zu diesem Zweck sind im vorliegenden Fall eine Deckelhub- und Schwenkvorrichtung 13 sowie eine Elektrodenhubvorrichtung 14 vorgesehen, die im vorliegenden Fall in die Deckelhub- und Schwenkvorrichtung 13 integriert ist.

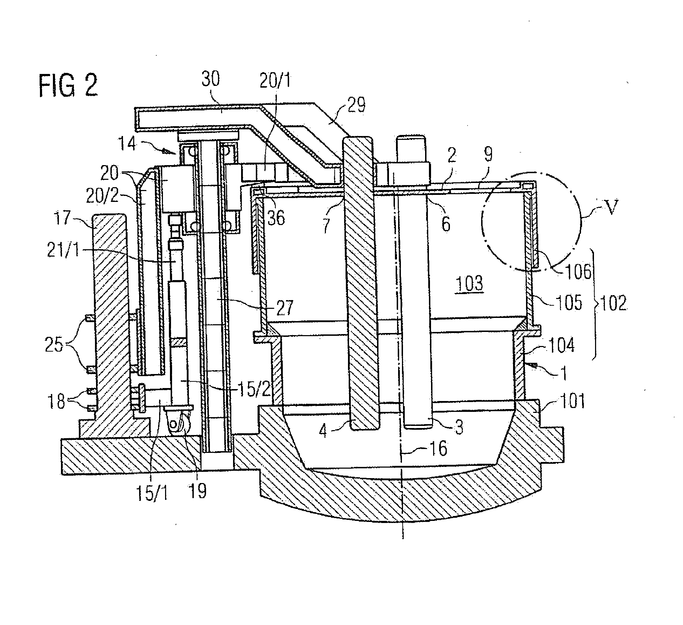

Die Deckelhub- und Schwenkvorrichtung zum Anheben, Absenken und Verschwenken eines auf dem Ofengefäß 1 angeordneten Deckels 2 enthält ein seitlich des Ofengefäßes 1 angeordnetes Schwenkportal 15, das auf einer parallel zur zentralen senkrechten Achse 16 des Ofengefäßes 1 ausgerichteten Führungsachse 17 mittels eines Drehlagers 18 drehbar gelagert und mittels eines nicht dargestellten Antriebs um die Führungsachse 17 schwenkbar ist. Das Schwenkportal ist in der Seitenansicht (siehe Fig.2) L-förmig ausgebildet, mit einem waagerechten Schenkel 15/1, der das Drehlager 18 trägt und einem senkrechten Schenkel 15/2, der sich auf Rollen 19 abstützt.

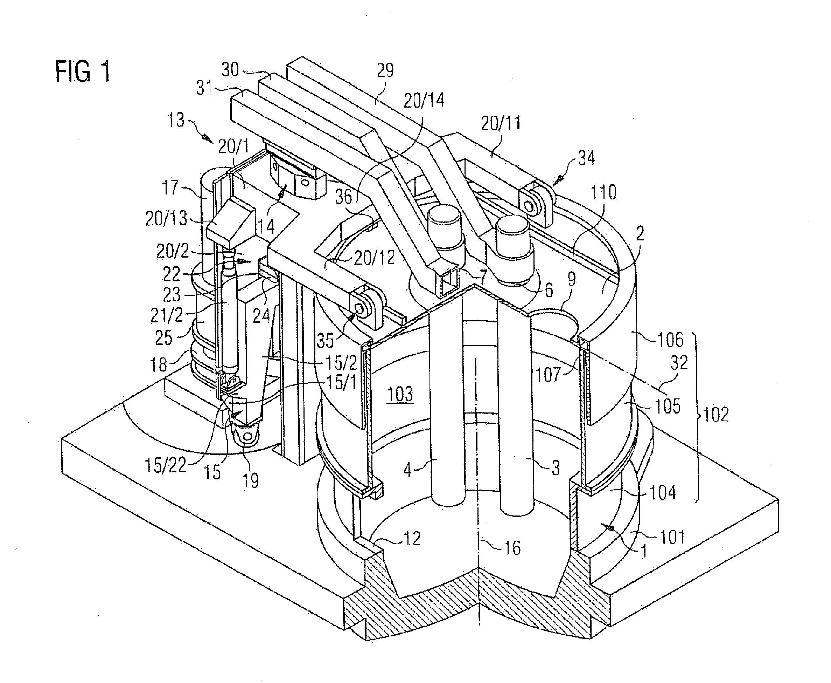

Die Deckelhub- und Schwenkvorrichtung 13 enthält im vorliegenden Fall eine als L-förmiges Tragteil 20 mit einem waagerechten Schenkel 20/1 und einem senkrechten Schenkel 20/2 ausgebildete Deckeltragkonstruktion. Das Tragteil 20 ist durch wenigstens eine Hubvorrichtung anhebbar und absenkbar. Bei der dargestellten Ausführungsform sind es zwei Hubvorrichtungen, nämlich eine hintere Hubvorrichtung 21/1 (siehe Fig. 2) und eine vordere Hubvorrichtung 21/2 (siehe Fig.1). Die Hubvorrichtungen 21/1 und 21/2 sind jeweils zwischen dem Schwenkportal 15 und der Deckeltragkonstruktion 13 im horizontalen Abstand voneinander angeordnet. Im konkreten Fall sind sie jeweils zwischen einer Konsole 15/22 des senkrechten Schenkels 15/2 des Schwenkportals 15 und einer Konsole 20/13 des waagerechten Schenkels 20/1 des L-förmigen Tragteils 20 angeordnet. Die in den Figuren nicht dargestellten Konsolen für die in Fig. 2 sichtbare hintere Hubvorrichtung 21/1 sind analog und spiegelbildlich zu den dargestellten Konsolen 15/22 und 20/13 für die vordere Hubvorrichtung 21/2 ausgebildet.

Zur Übertragung der Schwenkbewegung des Schwenkportals 15, auf die als L-förmiges Tragteil 20 ausgebildete Tragkonstruktion ist der senkrechte Schenkel 20/2 des Tragteils 20 durch eine Mitnahmevorrichtung 22 drehschlüssig mit dem senkrechten Schenkel 15/2 des Drehportals 15 verbunden. Die Mitnahmevorrichtung 22 wird im vorliegenden Fall durch eine senkrechte Nut 23 im senkrechten Schenkel 20/2 des L-förmigen Tragteils 20 und einen Mitnehmervorsprung 24 gebildet, der am senkrechten Schenkel 15/2 des Schwenkportals 15 befestigt ist und in die senkrechte Nut 23 eingreift. Die Vertikalfiihrung beim Anheben und Absenken der Deckeltragkonstruktion 20 erfolgt über ein unten am Schenkel 20/2 befestigtes Lager 25, das die Deckeltragkonstruktion 20 drehbar und axial verschiebbar mit der Führungsachse 17 verbindet.

Die Elektrodenhubvorrichtung 14 enthält drei Hubsäulen 26, 27, 28, die die Tragarme 29, 30 bzw. 31 für die Elektroden 3, 4 und 5 des Lichtbogenofens tragen und die in der Deckeltragkonstruktion 13, im Speziellen im waagerechten Schenkel 20/1 des L-förmigen Tragteils 20 gelagert sind. Die Elektrodenhubvorrichtung 14 ist in bekannter Weise ausgebildet, so dass sie keiner weiteren Erläuterung bedarf.

Da die Hubvorrichtungen 21/1,21/2 nicht, wie bei bekannten Konstruktionen, an einem Ende der Deckeltragkonstruktion angreifen, sondern im Abstand vom Lager 25 des L-förmigen Tragteils 20 am waagerechten Schenkel 20/1 desselben und, benachbart zu den Lagerstellen der Hubsäulen 26, 27, 28, lässt sich beim Anheben der Deckeltragkonstruktion 13 deren Biegebeanspruchung im Vergleich zu den bekannten Konstruktionen wesentlich verringern. Bei der vorliegenden Lösung bildet, bezüglich der Angriffspunkte der Hubvorrichtungen 21/1, 21/2, der Abschnitt des Tragteils 20, der auf der dem Ofendeckel abgewandten Seite liegt, im wesentlichen sind es der senkrechte Schenkel 20/2 und das Lager 25 des Tragteils, ein Gegengewicht zu der Gewichtsbelastung durch den Ofendeckel und so weit vorhanden, zu der im Tragteil gelagerte Elektrodenhubvorrichtung.

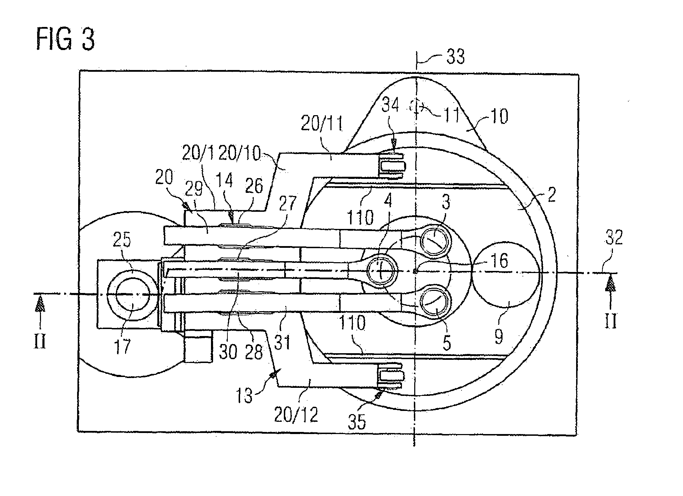

Der waagrechte Schenkel 20/1 des L-förmigen Tragteils 20 ist bei dem dargestellten Ausführungsbeispiel in der Draufsicht U-förmig ausgebildet, mit zwei durch ein Basisteil 20/10 verbundenen Tragarmen 20/11 und 20/12 (vgl. Fig. 1 und 3), die symmetrisch zu einer ersten Durchmesserachse 32 des Deckels 2 im Abstand voneinander angeordnet sind.

Der Deckel 2 wird durch die Tragarme 20/11 und 20/12 des Tragteils 20 nur teilweise überspannt, im vorliegenden Fall nicht ganz bis zu einer zur ersten Durchmesserachse 32 des Deckels senkrechten zweiten Durchmesserachse 33 und weist nahe der freien Enden der Tragarme 20/11 und 20/12 des Tragteils 20 jeweils eine Deckelaufhängevorrichtung 34 bzw. 35 auf, die vorzugsweise lösbar ausgebildet ist. Im vorliegenden Fall sind auf dem Deckel Ösen vorgesehen, in die, beispielsweise durch Stellglieder betätigbare Bolzen einschiebbar sind, welche an den freien Enden der Tragarme 20/11 und 20/12 des Tragteils 20 angebracht sind. Wegen der unsymmetrischen Aufhängung des Deckels 2 ist es erforderlich im Randbereich des Deckels noch eine Deckelniederhaltevorrichtung vorzusehen, die im vorliegenden Fall durch einen unten am Basisteil 20/10 des waagrechten Schenkels 20/1 des Tragteils 20 angebrachten Stützvorsprung 36 gebildet ist, der zusammen mit den Deckelaufhängevorrichtungen 34 und 35 eine stabile Dreipunktlagerung des Deckels ergibt. Hierdurch wird ein exaktes senkrechtes Anheben des Deckels ermöglicht.

Zum Auswechseln des Deckels werden die Bolzen der Deckelaufhängevorrichtungen 34 und 35 bei auf dem Gefäßrand aufliegendem Deckel 2 gelöst, das Tragteil 20 mittels der Hubvorrichtungen 21/1 und 21/2 angehoben und dann mit dem Schwenkportal 15 zur Seite geschwenkt.

Bei dem erfindungsgemäßen Schmelzofen ist das aus einem unteren Gefäßteil 101 1 und einem zylindrischen oberen Gefäßteil 102 gebildete Ofengefäß mit einem vergrößerbaren, variablen Aufnahmeraum 103 für das zu schmelzende Einsatzmaterial ausgebildet. Zu diesem Zweck enthält das zylindrische obere Gefäßteil 102 neben einem üblichen, auf den unteren Gefäßteil 101 aufgesetzten, gegebenenfalls flüssigkeitsgekühlten Wandabschnitt 104 einen ersten unteren zylindrischen Abschnitt 105 und einen diesen übergreifenden oberen zylindrischen Abschnitt 106, der relativ zum unteren zylindrischen Abschnitt teleskopisch verschiebbar ist. Zu diesem Zweck ist der obere zylindrische Abschnitt 106 des oberen Gefäßteils 102 am Rand des Ofengefäßdeckels 2 angebracht und mittels der an der Deckeltragkonstruktion 20 angreifenden Deckelhubvorrichtung, nämlich durch die Hubvorrichtungen 21/1 und 21/2 relativ zum unteren zylindrischen Abschnitt 105 des oberen Gefäßteils 102 teleskopisch verschiebbar. Die Deckelhubvorrichtungen 15/1 und 15/2 müssen demzufolge mit einem entsprechend großen Hub ausgebildet werden. Der Hub muss so groß sein, dass der am Deckelrand angebrachte obere Abschnitt 106 des oberen Gefäßteils 102 bis über den oberen Rand des unteren Gefäßteils 105 angehoben werden kann, damit der Deckel zum Chargieren des Einsatzmaterials zur Seite geschwenkt werden kann. Im Hinblick auf die Befüllung des Gefäßes, insbesondere bei flacher Ausbildung des Deckels 2, ist es vorteilhaft, wenn der untere Rand des oberen zylindrischen Abschnittes 106 des oberen Gefäßdeckels 102 um 0,3 m bis 0,8 m über dem oberen Rand des unteren zylindrischen Abschnittes 105 hebbar ist.

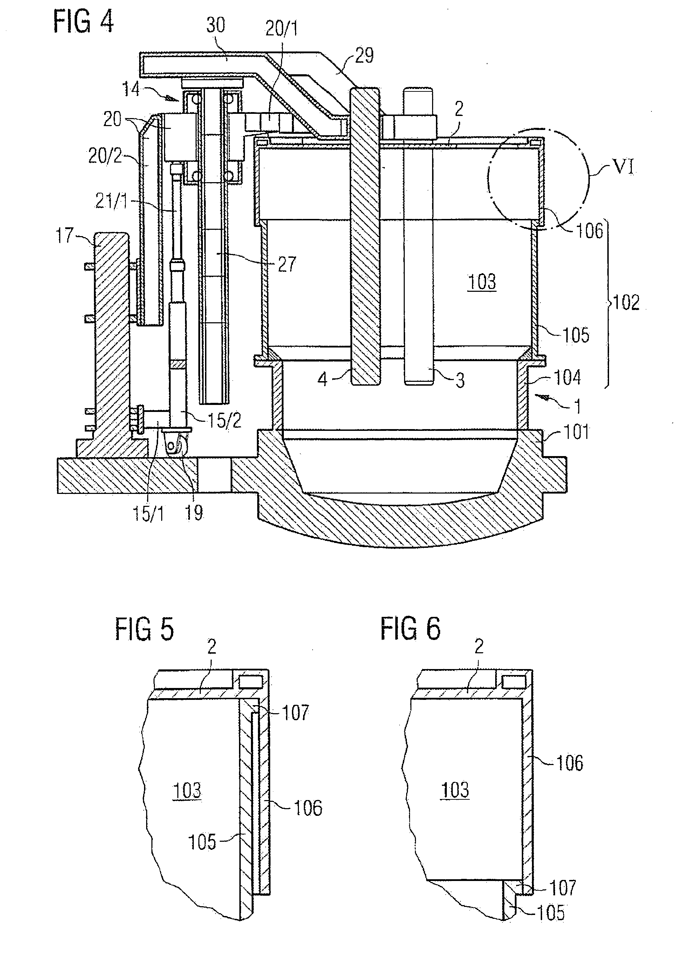

Fig. 4 stellt den Schmelzofen in einem angehobenen Zustand des oberen zylindrischen Abschnittes 106 dar. Die Fig. 5 und 6, welche vergrößerte Ausschnitte V und VI der Figuren 2 und 4 sind, lassen die beiden Positionen noch deutlicher erkennen. Es ist hier auch ersichtlich, dass der obere Rand des unteren Abschnittes 105 mit einem Ringflansch 107 versehen ist, der gleichzeitig als Führung für die teleskopische Verschiebbarkeit dient. An dieser Stelle, oder auch an weiteren Stellen, könnten auch Führungsnoppen oder ähnliche Führungselemente vorgesehen sein.

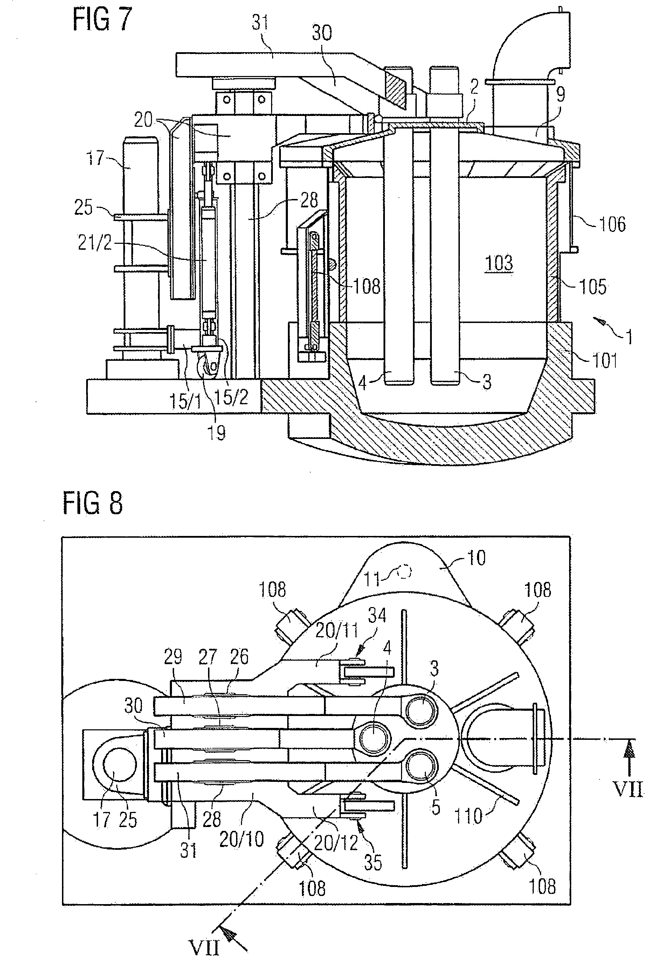

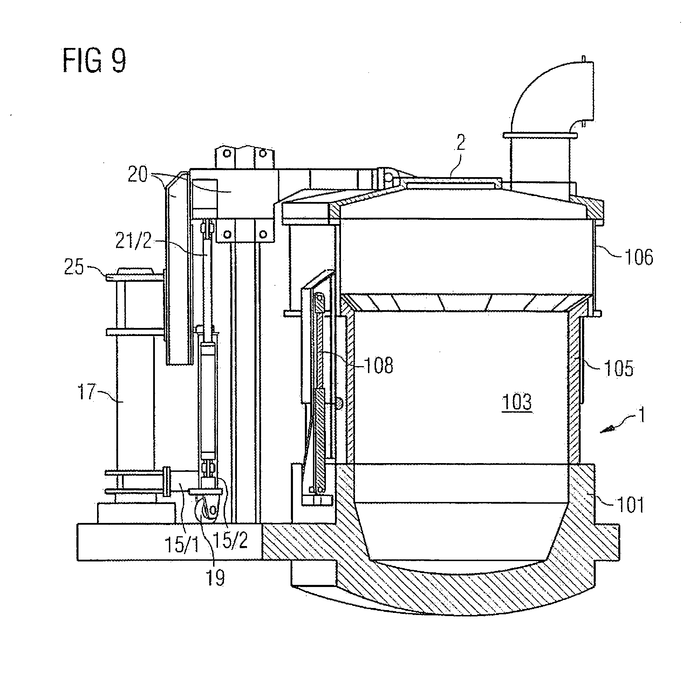

Obwohl im vorliegenden Fall das obere Gefäßteil 102 aus drei zylindrischen Wandabschnitten 104, 105 und 106 gebildet ist, können die beiden feststehenden Wandabschnitte 104 und 105 zu einem feststehenden Wandabschnitt zusammengefasst sein, wie beispielsweise bei der zweiten Ausführungsform gemäß den Figuren 7 bis 9.

Ferner kann die teleskopische Verschiebbarkeit zwischen dem oberen Wandabschnitt 106 und dem unteren Wandabschnitt 105 auch so ausgebildet sein, dass der obere Wandabschnitt 106 nicht wie bei dem dargestellten Ausführungsbeispiel außerhalb des unteren Wandabschnittes 105, also diesen übergreifend, sondern innerhalb desselben teleskopisch verschiebbar ist. Diese Variante ist nicht dargestellt.

Nach dem Chargieren des Ofengefäßes bei vergrößertem Aufnahmeraum, das heißt bei angehobenem oberen Abschnitt 206 gemäß Fig. 4, werden beim Einschmelzprozess durch Einbrennen der Elektroden in das Einsatzmaterial Krater gebildet, in die das Einsatzmaterial fällt, so dass der Deckel abgesenkt werden kann und damit auch eine Absenkung der Elektroden möglich ist. Hierdurch lässt sich der senkrechte Abstand zwischen den Elektrodenspitzen und dem (nicht dargestellten) Schmelzbad im unteren Gefäßteil bis zu der Position, die in Fig. 2 dargestellt ist, verringern.

Bei dem in den Fig. 7 bis 9 dargestellten Ausführungsbeispiel ist das obere Gefäßteil 106 nicht am Rand des Deckels 2 angebracht, sondern stützt sich auf vier Hubvorrichtungen 108 ab, die am Umfang des Ofengefäßes 1 verteilt angeordnet sind. Im Übrigen entspricht die Konstruktion dem ersten Ausführungsbeispiel, so dass zur Erläuterung auf diese Ausführungsform hingewiesen werden kann.
1. Schmelzofen, insbesondere Lichtbogenofen,
   mit einem Ofengefäß (1), aus einem unteren Gefäßteil (101) und einem zylindrischen oberen Gefäßteil (102) zur Aufnahme von zu schmelzendem Einsatzmaterial, insbesondere von Metallschrott,
   sowie mit einem von einer Deckeltragkonstruktion (13, 20) getragenen Ofengefäßdeckel (2), dadurch gekennzeichnet, dass das zylindrische obere Gefäßteil (102) einen ersten unteren (105) und einen zweiten oberen (106) zylindrischen Abschnitt enthält, von denen einer den anderen übergreift und durch wenigstens eine Hubvorrichtung (21/1, 21/2; 108) relativ zu diesem teleskopisch verschiebbar ausgebildet ist.
2. Schmelzofen nach Aspekt 1, dadurch gekennzeichnet, dass der obere Abschnitt (106) des oberen Gefäßteils (102) den unteren Abschnitt (105) des oberen Gefäßteils (102) übergreift.
3. Schmelzofen nach Aspekt 1 oder 2, dadurch gekennzeichnet, dass zum Anheben und Absenken des oberen Abschnittes (106) des oberen Gefäßteils (102) am Umfang des Ofengefäßes (1) verteilt angeordnete Hubvorrichtungen (108) vorgesehen sind.
4. Schmelzofen nach einem der Aspekte 1 bis 3, dadurch gekennzeichnet, dass der obere zylindrische Abschnitt (106) des oberen Gefäßteils (102) am Rand des Ofengefäßdeckels (2) angebracht ist und mittels einer an der Deckeltragkonstruktion (20) angreifenden Deckelhubvorrichtung (21/1, 21/2) relativ zum unteren zylindrischen Abschnitt(105) des oberen Gefäßteils (102) teleskopisch verschiebbar ist.
5. Schmelzofen nach Aspekt 4, dadurch gekennzeichnet, dass der untere Rand des oberen zylindrischen Abschnittes (106) des oberen Gefäßteils(102) um 0,3m bis 0,8m über den oberen Rand des unteren zylindrischen Abschnittes (105) hebbar ist
6. Schmelzofen nach einem der Aspekte 1 bis 5, dadurch gekennzeichnet, dass am oberen Rand des unteren Abschnittes (105) des oberen Gefäßteils (102) wenigstens ein Führungselement (107) zur teleskopischen Führung des oberen Abschnittes (106) des oberen Gefäßteils (102) vorgesehen ist.
7. Schmelzofen nach einem der Aspekte 1 bis 6, dadurch gekennzeichnet, dass der Gefäßdeckel flach mit Versteifungsrippen (110) ausgebildet ist.
8. Schmelzofen nach einem der Aspekte 1 bis 7, dadurch gekennzeichnet, dass die den Deckel (2) tragende Deckeltragkonstruktion (13, 20) auf einer seitlich des Ofengefäßes (1) angeordneten, parallel zu einer senkrechten zentralen Achse (16) des Ofengefäßes (1) ausgerichteten Führungsachse (17) axial verschiebbar gelagert und durch wenigstens eine Hubvorrichtung (21/1,21/2) hebbar und senkbar ist.
9. Schmelzofen nach Aspekt 8, dadurch gekennzeichnet, dass sich die Hubvorrichtung (21/1, 21/2) der Deckeltragkonstruktion (13, 20) auf einem seitlich des Ofengefäßes (1) angeordneten Schwenkportal (15; 15/1, 15/2) abstützt, das auf der Führungsachse (16) der Deckeltragkonstruktion (13; 20) drehbar gelagert und mittels eines Antriebs um die Führungsachse (17) schwenkbar ist, und
   die den Deckel (2) tragende Deckeltragkonstruktion (13; 20) auf der genannten Führungsachse drehbar gelagert und durch eine Mitnahmevorrichtung (22; 23, 24) drehschlüssig mit dem Schwenkportal (15; 15/1, 15/2) verbunden ist.
10. Schmelzofen nach Aspekt 8 oder 9, dadurch gekennzeichnet, dass an der Deckeltragkonstruktion (13; 20) ein Hohlzylinder (25) befestigt ist, der auf der genannten Führungsachse (17) drehbar gelagert ist.
11. Schmelzofen nach einem der Aspekte 8 bis 10, dadurch gekennzeichnet, dass die Deckeltragkonstruktion (13) ein L-förmiges Tragteil (20, 20/1, 20/2) enthält, mit wenigstens einem den Deckel (2) teilweise überspannenden waagrechten Schenkel (20/1).
12. Schmelzofen nach Aspekt 11, dadurch gekennzeichnet, dass am L-förmigen Tragteil (20) nahe des freien Endes des waagrechten Schenkels (20/1)zu beiden Seiten einer Durchmesserachse (32) des Deckels jeweils eine Deckelaufhängevorrichtung (34, 35) und im Bereich oberhalb des Deckelrandes eine Deckelniederhaltevorrichtung (36) vorgesehen ist.
13. Schmelzofen nach einem der Aspekte 8 bis 12, dadurch gekennzeichnet, dass die Deckelaufhängevorrichtung (34, 35) als eine durch ein Stellglied betätigbare Bolzen/Ösenverbindung ausgebildet ist.
14. Schmelzofen nach einem der Aspekte 8 bis 13, dadurch gekennzeichnet, dass die Deckeltragkonstruktion (13, 20) wenigstens eine Elektrodenhubvorrichtung (14) trägt.

## Patentansprüche

1. Drehstrom - Lichtbogenofen,
mit einem Ofengefäß (1), aus einem unteren Gefäßteil (101) und einem zylindrischen oberen Gefäßteil (102) zur Aufnahme von zu schmelzendem Einsatzmaterial, insbesondere von Metallschrott,
sowie mit einem von einer Deckeltragkonstruktion (13, 20) getragenen Ofengefäßdeckel (2), **dadurch gekennzeichnet, dass** das Volumen des Aufnahmeraums des Ofengefäßes dadurch variabel veränderbar ist, dass der Ofengefäßdeckel (2) mit mindestens einem Teil des zylindrischen oberen Gefäßteils (102) teleskopisch verschiebbar ist.

2. Drehstrom - Lichtbogenofen nach Anspruch 1, **dadurch gekennzeichnet, dass** das zylindrische obere Gefäßteil (102) einen ersten unteren (105) und einen zweiten oberen (106) zylindrischen Abschnitt enthält, von denen einer den anderen übergreift und durch wenigstens eine Hubvorrichtung (21/1, 21/2; 108) relativ zu diesem teleskopisch verschiebbar ausgebildet ist.

3. Drehstrom - Lichtbogenofen nach Anspruch 1 oder 2, **dadurch gekennzeichnet, dass** ein oberer Abschnitt (106) des oberen Gefäßteils (102) einen unteren Abschnitt (105) des oberen Gefäßteils (102) übergreift.

4. Drehstrom - Lichtbogenofen nach einem der Ansprüche 1 bis 3, **dadurch gekennzeichnet, dass** zum Anheben und Absenken eines oberen Abschnittes (106) des oberen Gefäßteils (102) am Umfang des Ofengefäßes (1) verteilt angeordnete Hubvorrichtungen (108) vorgesehen sind.

5. Drehstrom - Lichtbogenofen nach einem der Ansprüche 1 bis 4, **dadurch gekennzeichnet, dass** ein oberer zylindrischer Abschnitt (106) des oberen Gefäßteils (102) am Rand des Ofengefäßdeckels (2) angebracht ist und mittels einer an der
Deckeltragkonstruktion (20) angreifenden Deckelhubvorrichtung (21/1, 21/2) relativ zu einem unteren zylindrischen Abschnitt(105) des oberen Gefäßteils (102) teleskopisch verschiebbar ist.

6. Drehstrom - Lichtbogenofen nach Anspruch 5, **dadurch gekennzeichnet, dass** der untere Rand des oberen zylindrischen Abschnittes (106) des oberen Gefäßteils(102) um 0,3m bis 0,8m über den oberen Rand des unteren zylindrischen Abschnittes (105) hebbar ist

7. Drehstrom - Lichtbogenofen nach einem der Ansprüche 1 bis 6, **dadurch gekennzeichnet, dass** am oberen Rand eines unteren Abschnittes (105) des oberen Gefäßteils (102) wenigstens ein Führungselement (107) zur teleskopischen Führung eines oberen Abschnittes (106) des oberen Gefäßteils (102) vorgesehen ist.

8. Drehstrom - Lichtbogenofen nach einem der Ansprüche 1 bis 7, **dadurch gekennzeichnet, dass** der Gefäßdeckel flach mit Versteifungsrippen (110) ausgebildet ist.

9. Drehstrom - Lichtbogenofen nach einem der Ansprüche 1 bis 8, **dadurch gekennzeichnet, dass** die den Deckel (2) tragende Deckeltragkonstruktion (13, 20) auf einer seitlich des Ofengefäßes (1) angeordneten, parallel zu einer senkrechten zentralen Achse (16) des Ofengefäßes (1) ausgerichteten Führungsachse (17) axial verschiebbar gelagert und durch wenigstens eine Hubvorrichtung (21/1, 21/2) hebbar und senkbar ist.

10. Drehstrom - Lichtbogenofen nach Anspruch 9, **dadurch gekennzeichnet, dass** sich die Hubvorrichtung (21/1, 21/2) der Deckeltragkonstruktion (13, 20) auf einem seitlich des Ofengefäßes (1) angeordneten Schwenkportal (15; 15/1, 15/2) abstützt, das auf der Führungsachse (16) der Deckeltragkonstruktion (13; 20) drehbar gelagert und mittels eines Antriebs um die Führungsachse (17) schwenkbar ist, und
die den Deckel (2) tragende Deckeltragkonstruktion (13; 20) auf der genannten Führungsachse drehbar gelagert und durch eine Mitnahmevorrichtung (22; 23, 24) drehschlüssig mit dem Schwenkportal (15; 15/1, 15/2) verbunden ist.

11. Drehstrom - Lichtbogenofen nach Anspruch 9 oder 10, **dadurch gekennzeichnet, dass** an der Deckeltragkonstruktion (13; 20) ein Hohlzylinder (25) befestigt ist, der auf der genannten Führungsachse (17) drehbar gelagert ist.

12. Drehstrom - Lichtbogenofen nach einem der Ansprüche 9 bis 11, **dadurch gekennzeichnet, dass** die Deckeltragkonstruktion (13) ein L-förmiges Tragteil (20, 20/1, 20/2) enthält, mit wenigstens einem den Deckel (2) teilweise überspannenden waagrechten Schenkel (20/1).

13. Drehstrom - Lichtbogenofen nach Anspruch 12, **dadurch gekennzeichnet, dass** am L-förmigen Tragteil (20) nahe des freien Endes des waagrechten Schenkels (20/1)zu beiden Seiten einer Durchmesserachse (32) des Deckels jeweils eine Deckelaufhängevorrichtung (34, 35) und im Bereich oberhalb des Deckelrandes eine Deckelniederhaltevorrichtung (36) vorgesehen ist.

14. Drehstrom - Lichtbogenofen nach einem der Ansprüche 9 bis 13, **dadurch gekennzeichnet, dass** die Deckelaufhängevorrichtung (34, 35) als eine durch ein Stellglied betätigbare Bolzen/Ösenverbindung ausgebildet ist.

15. Drehstrom - Lichtbogenofen nach einem der Ansprüche 9 bis 14, **dadurch gekennzeichnet, dass** die Deckeltragkonstruktion (13, 20) wenigstens eine Elektrodenhubvorrichtung (14) mit einer Hubsäule (26, 27 bzw. 28) für jede der drei Elektroden(3, 4, 5) trägt.

## Claims

1. Alternating current arc furnace having
a furnace vessel (1) made of a lower vessel part (101) and a cylindrical upper vessel part (102) for accommodating to-be-melted feedstock, in particular scrap metal, and
a furnace vessel cover (2) supported by a cover support structure (13, 20),
**characterized in that** the volume of the accommodation space of the furnace vessel is variably changeable by telescopic displaceability of the furnace vessel cover (2) with at least a portion of the cylindrical upper furnace part (102).

2. Alternating current arc furnace according to claim 1, **characterized in that** the cylindrical upper vessel part (102) comprises a first lower (105) and a second upper (106) cylindrical segment, of which one overlaps the other and is constructed so as to be telescopically displaceable relative to the other by at least one lifting device (21/1, 21/2; 108).

3. Alternating current arc furnace according to claim 1 or 2, **characterized in that** an upper segment (106) of the upper vessel part (102) overlaps a lower segment (105) of the upper vessel part (102).

4. Alternating current arc furnace according to one of claims 1 to 3, **characterized in that** lifting devices (108) disposed in a distributed manner on the circumference of the furnace vessel (1) are provided for lifting and lowering an upper segment (106) of the upper vessel part (102).

5. Alternating current arc furnace according to one of claims 1 to 4, **characterized in that** an upper cylindrical segment (106) of the upper vessel part (102) is attached to the edge of the furnace vessel cover (2) and is telescopically displaceable relative to a lower cylindrical segment (105) of the upper vessel part (102) by a cover lifting device (21/1, 21/2) acting upon the cover support structure (20).

6. Alternating current arc furnace according to claim 5, **characterized in that** the lower edge of the upper cylindrical segment (106) of the upper vessel part (102) is liftable about 0.3 m to 0.8 m over the upper edge of the lower cylindrical segment (105).

7. Alternating current arc furnace according to one of claims 1 to 6, **characterized in that** at least one guide element (107) is provided on the upper edge of a lower segment (105) of the upper vessel part (102) for telescopic guiding of an upper segment (106) of the upper vessel part (102).

8. Alternating current arc furnace according to one of claims 1 to 7, **characterized in that** the vessel cover is constructed flat with reinforcement ribs (110).

9. Alternating current arc furnace according to one of claims 1 to 8, **characterized in that** the cover support structure (13, 20) supporting the cover (2) is axially-displaceably borne on a guide axis (17), which is oriented parallel to a vertical, central axis (16) of the furnace vessel (1) and is disposed to the side of the furnace vessel (1), and the cover support structure (13, 20) is liftable and lowerable by at least one lifting device (21/1, 21/2).

10. Alternating current arc furnace according to claim 9, **characterized in that** the lifting device (21/1, 21/2) of the cover support structure (13, 20) is supported on a pivoting gantry (15; 15/1, 15/2), which is disposed to the side of the furnace vessel (1), is rotatably borne on the guide axis (17) of the cover support structure (13; 20) and is pivotable about the guide axis (17) by a drive, and
the cover support structure (13; 20) supporting the cover (2) is rotatably borne on said guide axis and is connected with the pivoting gantry (15; 15/1, 15/2) by an engagement device (22; 23, 24) so as to rotate therewith.

11. Alternating current arc furnace according to claim 9 or 10, **characterized in that** a hollow cylinder (25) is attached to the cover support structure (13; 20) and is rotatably borne on said guide axis (17).

12. Alternating current arc furnace according to one of claims 9 to 11, **characterized in that** the cover support structure (13) comprises an L-shaped support part (20, 20/1, 20/2) having at least one horizontal leg (20/1) partially traversing the cover (2).

13. Alternating current arc furnace according to claim 12, **characterized in that** a cover suspending device (34, 35) is respectively provided on each side of a diametrical axis (32) of the cover on the L-shaped support part (20) near the free end of the horizontal leg (20/1) and a cover hold-down device (36) is provided in the area above the cover edge.

14. Alternating current arc furnace according to one of claims 9 to 13, **characterized in that** the cover suspending device (34, 35) is formed as a bolt/eyelet connection actuatable by an actuator.

15. Alternating current arc furnace according to one of claims 9 to 14, **characterized in that** the cover support structure (13, 20) supports at least one electrode lifting device (14) having each a lifting column (26, 27 or 28) for each of the three electrodes (3, 4, 5).

## Revendications

1. Four à arc électrique à courant triphasé, comprenant :
une cuve de four (1), constituée d'une partie de cuve inférieure (101) et d'une partie de cuve supérieure cylindrique (102) pour recevoir un matériau de charge à faire fondre, en particulier de la mitraille métallique,
ainsi qu'un couvercle de cuve de four (2) supporté par une structure porte-couvercle (13, 20), **caractérisé en ce que** le volume de l'espace de réception de la cuve de four peut être modifié de manière variable de sorte que le couvercle de cuve de four (2) puisse effectuer un coulissement télescopique avec au moins une partie de la partie de cuve supérieure cylindrique (102).

2. Four à arc électrique à courant triphasé selon la revendication 1, **caractérisé en ce que** la partie de cuve supérieure cylindrique (102) contient une première section cylindrique inférieure (105) et une seconde section cylindrique supérieure (106), dont l'une recouvre l'autre et est conformée pour pouvoir coulisser l'une par rapport à l'autre de manière télescopique au moyen d'au moins un dispositif de levage (21/1, 21/2 ; 108).

3. Four à arc électrique à courant triphasé selon la revendication 1 ou la revendication 2, **caractérisé en ce que** la section supérieure (106) de la partie de cuve supérieure (102) recouvre la section inférieure (105) de la partie de cuve supérieure (102).

4. Four à arc électrique à courant triphasé selon l'une quelconque des revendications 1 à 3, **caractérisé en ce que**, pour soulever et abaisser la section supérieure (106) de la partie de cuve supérieure (102), il est prévu des dispositifs de levage (108) distribués sur le pourtour de la cuve de four (1).

5. Four à arc électrique à courant triphasé selon l'une quelconque des revendications 1 à 4, **caractérisé en ce que** la section cylindrique supérieure (106) de la partie de cuve supérieure (102) est montée sur le bord du couvercle de cuve de four (2) et peut coulisser de manière télescopique par rapport à la section cylindrique inférieure (105) de la partie de cuve supérieure (102) au moyen d'un dispositif de levage de couvercle (21/1, 21/2) s'appliquant sur la structure porte-couvercle (20).

6. Four à arc électrique à courant triphasé selon la revendication 5, **caractérisé en ce que** le bord inférieur de la section cylindrique supérieure (106) de la partie de cuve supérieure (102) peut être soulevé de 0,3 m à 0,8 m au-dessus du bord supérieur de la section cylindrique inférieure (105)

7. Four à arc électrique à courant triphasé selon l'une quelconque des revendications 1 à 6, **caractérisé en ce qu'**il est prévu, sur le bord supérieur de la section inférieure (105) de la partie de cuve supérieure (102), au moins un élément de guidage (107) pour le guidage télescopique de la section supérieure (106) de la partie de cuve supérieure (102).

8. Four à arc électrique à courant triphasé selon l'une quelconque des revendications 1 à 7, **caractérisé en ce que** le couvercle de la cuve se présente sous une forme plate avec des nervures de renfort (110).

9. Four à arc électrique à courant triphasé selon l'une quelconque des revendications 1 à 8, **caractérisé en ce que** la structure porte-couvercle (13, 20) portant le couvercle (2) est montée à coulissement axial sur un axe de guidage (17) agencé latéralement à la cuve de four (1) et orienté parallèlement à un axe central vertical (16) de la cuve de four (1) et peut être soulevée et abaissée par au moins un dispositif de levage (21/1, 21/2).

10. Four à arc électrique à courant triphasé selon la revendication 9, **caractérisé en ce que** le dispositif de levage (21/1, 21/2) de la structure porte-couvercle (13, 20) s'appuie sur un portique pivotant (15 ; 15/1, 15/2) agencé latéralement à la cuve de four (1), lequel portique est monté à rotation sur l'axe de guidage (16) de la structure porte-couvercle (13 ; 20) et peut pivoter au moyen d'une commande autour de l'axe de guidage (17), et **en ce que**
la structure porte-couvercle (13 ; 20) portant le couvercle (2) est montée à rotation sur ledit axe de guidage et est raccordé solidaire en rotation au portique pivotant (15 ; 15/1, 15/2) par un dispositif d'entraînement (22 ; 23, 24).

11. Four à arc électrique à courant triphasé selon la revendication 9 ou la revendication 10, **caractérisé en ce qu'**il est fixé sur la structure porte-couvercle (13 ; 20) un cylindre creux (25) qui est monté à rotation sur ledit axe de guidage (17).

12. Four à arc électrique à courant triphasé selon l' une quelconque des revendications 9 à 11, **caractérisé en ce que** la structure porte-couvercle (13) contient une partie porteuse (20, 20/1, 20/2) en forme de L, avec au moins une branche horizontale (20/1) recouvrant partiellement le couvercle (2).

13. Four à arc électrique à courant triphasé selon la revendication 12, **caractérisé en ce qu'**il est prévu, sur la partie porteuse (20) en forme de L, à proximité de l'extrémité libre de la branche horizontale (20/1) de part et d'autre d'un axe diamétral (32) du couvercle, respectivement, un dispositif de suspension de couvercle (34, 35) et, dans la zone au-dessus du bord du couvercle, un dispositif de retenue de couvercle (36).

14. Four à arc électrique à courant triphasé selon l'une quelconque des revendications 9 à 13, **caractérisé en ce que** le dispositif de suspension de couvercle (34, 35) se présente sous la forme d'un raccord à boulon/oeillet actionnable par un organe de réglage.

15. Four à arc électrique à courant triphasé selon l'une quelconque des revendications 9 à 14, **caractérisé en ce que** la structure porte-couvercle (13, 20) supporte au moins un dispositif de levage d'électrodes (14) avec une colonne de levage (26, 27 ou 28) pour chacune des trois électrodes (3, 4, 5).
